# FASCICULE DE BREVET EUROPEEN

(11) **EP 4 504 463 B1**
(45) Date de publication et mention de la délivrance du brevet: **03.06.2026**
(21) Numéro de dépôt: 23716573.3
(22) Date de dépôt: 04.04.2023
(51) Int. Cl.: B25J 15/00, B25J 15/02, B25J 15/06

(54) **DISPOSITIF DE PRÉHENSION DE COUCHES DE PRODUITS**
VORRICHTUNG ZUM GREIFEN VON PRODUKTLAGEN
DEVICE FOR GRIPPING LAYERS OF PRODUCTS

(30) Priorité: 05.04.2022 FR 2203119
(43) Date de publication de la demande: 12.02.2025
(73) Titulaire: FIVES SYLEPS, 56100 Lorient (FR)
(72) Inventeur: POUPARD, Vincent, 56100 Lorient (FR); FRESNEAU, Aymeric, 56100 Lorient (FR)
(74) Mandataire: Novagraaf Group
(86) Numéro de dépôt international: PCT/EP2023/058890
(87) Numéro de publication internationale: WO 2023/194406

(56) Documents cités:
- EP-B1- 1 921 029
- US-A1- 2013 177 380
- US-A1- 2013 236 285
- US-B2- 10 710 822

## Description

### DOMAINE TECHNIQUE DE L'INVENTION

L'invention appartient au domaine technique des appareils et systèmes applicables au domaine de la logistique.

En particulier l'invention porte sur un dispositif de préhension pouvant être monté sur un robot de palettisation ou de dépalettisation pour la préhension de couches de produits.

### ARRIERE-PLAN TECHNOLOGIQUE DE L'INVENTION

Dans ce domaine, des systèmes de palettisation ou dépalettisation existent, mettant en œuvre un robot pour déposer ou enlever des couches de produits, notamment par serrage ou saisis par en dessous ou par aspiration.

Les solutions existantes sont généralement adaptées à certains produits seulement et manquent d'efficacité. Notamment, certaines solutions présentent une plaque de préhension mobile dans une chambre de dépression, cependant le volume de la chambre n'est pas adapté à la hauteur des objets, ce qui rend la dépression peu efficace. D'autres nécessitent systématiquement un serrage mécanique sur les côtés, ce qui ne convient pas à des objets fragiles.

Certaines solutions utilisent un système de soutien par le dessous des objets saisis, néanmoins ces systèmes sont souvent encombrants.

Le document US2013/236285 présente un dispositif de préhension avec une plaque d'aspiration et une jupe latérale en matériau souple.

La présente invention a pour objectif de proposer un dispositif de préhension apte à être monté sur un robot de palettisation et permettant de régler au moins une partie des problèmes mentionnés ci-dessus.

### RESUME DE L'INVENTION

A cet effet l'invention concerne un dispositif de préhension destiné à être monté sur un robot de palettisation ou de dépalettisation pour la préhension d'un ensemble de produits arrangés sous forme d'au moins une couche sur un contenant, ledit dispositif de préhension comprenant un châssis sur lequel sont montées :
- une plaque d'aspiration comprenant des faces latérales formant des surfaces d'appui et une face inférieure qui forme un plan sensiblement horizontal par rapport au sol lorsque le dispositif de préhension est monté sur le robot, ladite plaque d'aspiration étant reliée à un premier dispositif de pompage et présentant des ouvertures de dépression, et étant agencée pour que sa face inférieure vienne au contact d'une couche de produits par un déplacement du dispositif de préhension, et
- une jupe latérale en matériau souple formant une bande entourant lesdites faces latérales de la plaque d'aspiration,

Selon l'invention la jupe est configurée pour passer d'une position de repos dans laquelle elle est à distance avec la ou les couche(s) de produits à une position de travail dans laquelle elle est en contact avec la ou les couche(s) de produits et les surfaces d'appui de la plaque d'aspiration et dans laquelle elle forme avec le plan (P) un volume de dépression fermé au-dessus et sur les côtés de la ou les couche(s) de produits, la plaque d'aspiration étant mobile verticalement par rapport à la jupe pour adapter le volume de dépression à la hauteur de la ou les couche(s) de produits à saisir par le préhenseur.

Le fait d'adapter le volume de dépression aux objets réduit les fuites et maximise l'effet de la dépression et permet un meilleur maintien des objets.

Le maintien par dépression est un mode de maintien adapté à tous types d'objets, notamment les plus fragiles qui ne peuvent être maintenus par serrage mécanique, tels que les emballages secondaires de produits laitiers.

Optionnellement, le volume de dépression peut être adapté à la nature des produits.

Le robot peut être poly-articulé, cartésien ou tout autre système adapté à la palettisation ou dépalettisation pouvant supporter le préhenseur selon l'invention.

Les produits pouvant être de natures différentes, par exemple des cartons, des produits laitiers ou tout autre produit issues de l'industrie agro-alimentaire susceptibles d'être transportés sur une palette.

Avantageusement, la plaque d'aspiration peut comprendre des ouvertures latérales sur son contour pour coller par aspiration la jupe latérale à ses faces d'appui en position de travail. Ceci permet une meilleure étanchéité du volume de dépression.

Selon l'invention, le dispositif de préhension comprend en outre un dispositif de serrage apte à être activé pour venir au contact et/ou serrer la ou les couche(s) de produits. Ceci permet assurer ou d'améliorer le maintien des produits, notamment des produits rigides.

Selon la nature des produits, le dispositif de serrage peut venir serrer les produits lorsqu'ils sont rigides ou juste au contact pour favoriser le maintien par la dépression. Selon l'invention, le dispositif de serrage comprend quatre barres télescopiques formant un rectangle dont la surface diminue lorsque le dispositif de serrage est activé pour venir au contact de la couche de produits. Ceci aide à délimiter l'espace de dépression et augmente l'efficacité de maintien des produits. Selon un exemple de réalisation, la jupe comprend quatre toiles rectangulaires, chacune étant disposée d'un côté du rectangle défini par les barres télescopiques et présentant une longueur similaire à la longueur maximale de la barre télescopique disposée du même côté du rectangle et ayant un côté inférieur partiellement fixé à celle-ci.

Ceci facilite la maintenance et augmente la durée de vie de la jupe car elle est plus adaptée au changement de tailles de couches de produits.

Avantageusement, un dispositif d'accumulation peut être agencé entre chaque paire de barres télescopiques adjacentes, ledit dispositif d'accumulation étant configuré pour recevoir une partie excédentaire de chacune des deux toiles fixées à ladite paire de barres télescopiques lorsque le dispositif de serrage est activé pour venir au contact de la ou les couche(s) de produits.

Le dispositif d'accumulation peut présenter une hauteur au moins similaire à la hauteur des toiles.

Ceci permet une bonne étanchéité ce qui permet d'augmenter l'efficacité de la dépression. En outre, en empêchant le pliage ou froissage des parties excédentaires des toiles cela augmente la durée de vie de la jupe.

Avantageusement, le dispositif de préhension peut comprendre en outre un plateau de support de la ou les couche(s) de produits, mobile horizontalement entre une position de support dans laquelle il est situé sous la ou les couche(s) de produits et une position de repli dans laquelle il est à l'écart de des produits. Les produits sont par exemple maintenus par la dépression et sécurisé par le dessous par le plateau pour éviter qu'un ou plusieurs produits tombent.

Avantageusement, le plateau de support peut être formé par une pluralité de panneaux articulés les uns par rapport aux autres et aptes à être déployés sous les produits en position de support et à être repliés en position de repli. Cet agencement permet de réduire l'espace mort et la taille du système, en conséquence le préhenseur est plus compacte.

Avantageusement, le plateau peut être formé de deux parties identiques agencées chacune sur un coté de la base du châssis. Cette disposition en deux parties permet de réduire davantage l'encombrement dans le dispositif de préhension.

Avantageusement, la plaque d'aspiration peut comprendre en outre des ouvertures d'aspiration reliées à un deuxième dispositif de pompage et configurées pour aspirer des produits lorsque la plaque d'aspiration est en position de contact avec la ou les couche(s) de produits.

Les ouvertures d'aspiration distinctes des ouvertures de dépression peuvent par exemple être reliées à une pompe à vide pouvant assurer un fort débit et permettre une aspiration puissante des produits par le dessus.

Les ouvertures d'aspiration peuvent par exemple déboucher dans des ventouses individuelles ou des plaques en mousse agencées à l'extrémité inférieure de la plaque d'aspiration.

Avantageusement, le dispositif de préhension peut comprendre au moins un détecteur de contact entre la plaque d'aspiration et les produits.

L'invention porte également sur un système de palettisation ou dépalettisation comprenant un robot muni d'un dispositif de préhension tel que décrit ci-dessus.

### BREVE DESCRIPTION DES FIGURES

D'autres particularités et avantages de l'invention apparaîtront dans la description ci-après en relation avec les dessins annexés, donnés à titre d'exemples non limitatifs, dans lesquelles :
[Fig. 1] est une vue globale d'un exemple de préhenseur selon l'invention.
[Fig. 2] est une vue éclatée du préhenseur de la figure 1.
[Fig. 3] est une vue de dessous du préhenseur de la figure 1.
[Fig. 4] est une vue en perspective de dessous montrant un plateau de support en position repliée.
[Fig. 5] est une vue en perspective de dessous montrant un exemple de plateau de support en deux parties en position ouverte.
[Fig. 6] est une vue en perspective de dessous montrant un dispositif d'accumulation selon un exemple de réalisation de l'invention.

Sauf précision contraire, un même élément apparaissant sur des figures différentes présente une référence unique.

### DESCRIPTION DETAILLEE

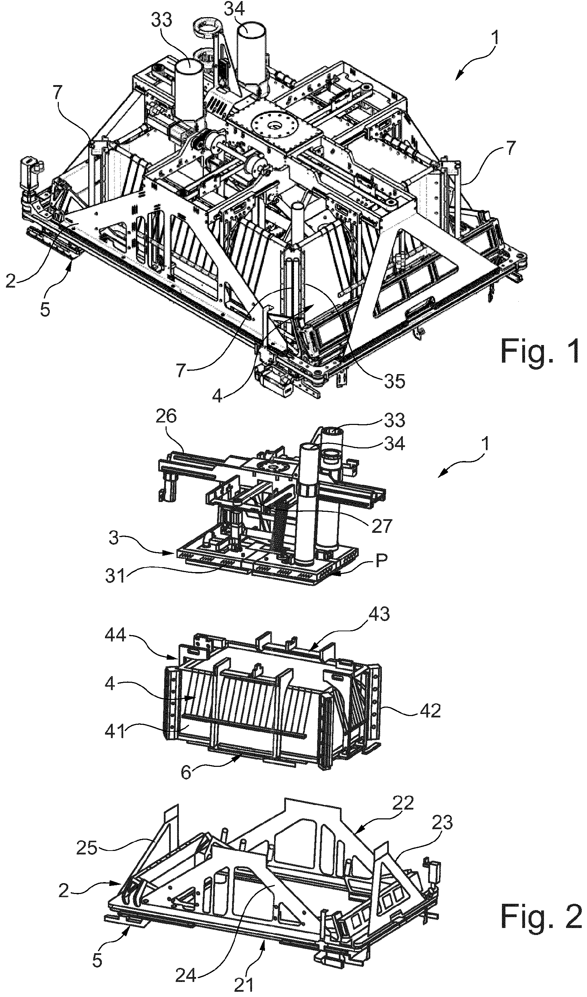

La figure 1 montre une représentation schématique d'un exemple de réalisation d'un préhenseur 1 selon l'invention. La figure 2 est une vue éclatée du préhenseur 1 de la figure 1.

Le préhenseur 1 peut être monté sur un robot poly-articulé ou un robot de type cartésien.

Selon l'exemple de réalisation illustré, le préhenseur 1 comprend un châssis 2 dont la base 21 est rectangulaire et des supports 22, 23, 24, 25 montants de la base 21. Un système de ponts croisés 26, 27 peut être fixé à l'extrémité supérieure des supports 22, 23, 24, 25. Une plaque d'aspiration 3 est reliée audit système de ponts par un mécanisme autorisant un déplacement vertical de la plaque d'aspiration par rapport au châssis. Un tel mécanisme est connu en soi et ne sera donc pas détaillé ici.

Dans l'exemple de réalisation, la plaque 3 d'aspiration est reliée à deux pompes à turbines via des tubes 33, 34 et comprend des ouvertures 30 vers le bas et des ouvertures latérales 31.

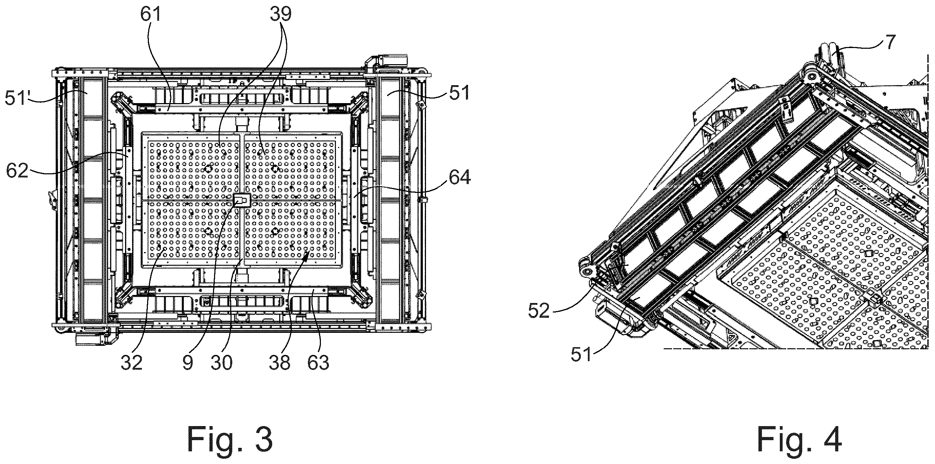

Avantageusement, la plaque 3 d'aspiration peut comprendre en outre des ouvertures d'aspiration 32 visibles sur la figure 3. Ces ouvertures d'aspiration sont reliées à une pompe à vide 35 pour pouvoir aspirer directement par le dessus les produits, lorsque la plaque d'aspiration est en contact avec la couche de produits et le vide est actionné. Cela est notamment intéressant pour des produits présentant une face supérieure régulière permettant leur aspiration.

Dans l'exemple de réalisation illustré, la face inférieure 38 comprend des plaques de mousse 39 dans lesquelles débouchent les ouvertures d'aspiration 32 à travers lesquelles les objets peuvent être aspirés.

Selon un autre mode de réalisation, non illustré, les ouvertures d'aspiration débouchent dans des ventouses individuelles.

Comme montré par la figure 2, une jupe 4 latérale en matériau souple formant une bande entourant les faces latérales de la plaque 3 d'aspiration.

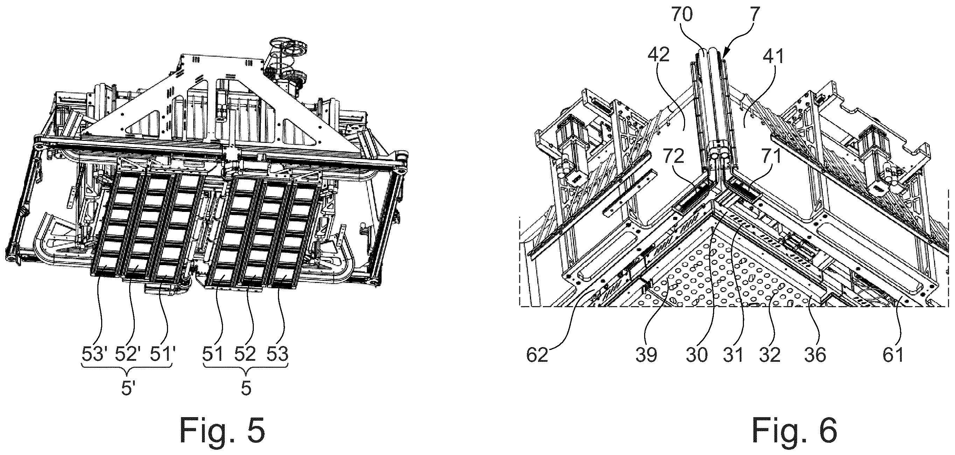

Selon l'exemple de réalisation illustré en figures 2 et 6, la jupe 4 comprend quatre toiles 41, 42, 43, 44 rectangulaires. Le côté inférieur de chaque toile est en partie fixée à une barre télescopique 61, 62, 63, 64 d'un dispositif de serrage 6 agencé dans la base 21 du châssis. La fixation est sur la partie restant fixe de la barre télescopique. Sur la glissière 71, 72 la toile n'est pas fixée.

Tel que représenté sur la figure 3, le dispositif de serrage 6 est dans une configuration où les barres télescopiques 61, 62, 63, 64 ont leurs longueurs maximales.

Dans l'exemple de réalisation montré aux figures 1 et 3, le côté supérieur et les autres côtés sont également fixés par des moyens connus de sorte que chaque toile garde la forme d'un rectangle.

Par ailleurs, comme cela est visible notamment sur les figures 1 et 6, un dispositif d'accumulation 7 est agencé entre chaque paire de barres télescopiques adjacentes 61, 62. Les dispositif d'accumulation 7 est configuré pour recevoir la partie excédentaire de chacune des deux toiles 41, 42 fixées à la paire de barres télescopiques 61, 62 lorsque le dispositif de serrage est activé pour venir au contact de la ou des couche(s) de produits.

Les figures 4 et 5 montrent un plateau 5, 5' optionnel de support de la ou des couche(s) de produits en position de support dans laquelle il est déployé sous la ou les couche(s) de produits.

Selon l'exemple montré, le plateau de support est formé deux parties comprenant chacune une pluralité de panneaux 51, 52, 53, 51', 52', 53' articulés les uns par rapport aux autres et pouvant être déployés sous les produits en position de support et être repliés en position de repli comme dans la figure 4.

Pour charger une ou plusieurs couche(s) de produits par le dispositif 1 de préhension selon l'invention, les étapes suivantes sont exécutées par le système de palettisation/dépalettisation comprenant le dispositif 1 :
- le robot portant de dispositif de préhension 1, déplace ce dernier vers la palette sur laquelle les produits sont chargés,
- la plaque d'aspiration 3 étant en position basse au niveau de la base 21 du châssis, le dispositif 1 est déplacé jusqu'à ce qu'un contact se produise entre la face inférieure de la plaque 3 et la face supérieure des produits, une caméra 3D 9 peut servir à centrer le préhenseur lors de cette descente. Le contact pouvant être détecté par des détecteurs infrarouges disposés en partie inférieure du châssis et/ou un détecteur de mouvement en partie supérieure du châssis.
- le robot continue de descendre ce qui induit un déplacement relatif de la plaque d'aspiration 3 par rapport à la jupe, ce déplacement étant d'une distance verticale prédéterminée relativement à l'épaisseur de la ou des couche(s) de produits à saisir.
- selon la nature des produits, le dispositif de serrage 6 peut être activé pour venir au contact des produits seulement ou exercer une force de serrage sur les produits. Lors du déplacement des barres télescopique 61, 62, 63, 64 au contact des produits, les toiles de la jupe sont également déplacées jusqu'à ce qu'un contact se produise entre la jupe et les surfaces latérales 30 de la plaque 3, ainsi qu'avec les produits. Lors du déplacement des toiles formant la jupe télescopique 4 au contact des produits, la partie excédentaire de chaque toile 41, 42, 43, 44 s'accumule de chaque côté dans un dispositif d'accumulation 7 de sorte que dans chaque dispositif d'accumulation, les parties excédentaires de deux toiles se croisent créant une étanchéité de la chambre de dépression.
- les turbines peuvent être mises en marche pour créer une dépression dans la chambre et fixer la jupe aux surfaces latérales de la plaque grâce aux ouvertures 31. Cette dépression peut être suffisante dans certains cas à prendre la couche de produits.
- une aspiration par les ouvertures d'aspiration 32 peut être optionnellement activée en activant la pompe à vide.
- le plateau de support peut également être déployé pour passer sous les produits et sécuriser d'avantage le déplacement des objet saisis par le dispositif 1.

## Revendications

1. Dispositif (1) de préhension destiné à être monté sur un robot de palettisation ou dépalettisation pour la préhension d'un ensemble de produits arrangés sous forme d'au moins une couche sur un contenant, ledit dispositif (1) de préhension comprenant un châssis (2) sur lequel sont montés :
- une plaque (3) d'aspiration comprenant des faces latérales formant des surfaces d'appui et une face inférieure qui forme un plan (P) sensiblement horizontal lorsque le dispositif de préhension est monté sur le robot, ladite plaque d'aspiration étant reliée à un premier dispositif de pompage et présentant des ouvertures de dépression (30), et étant agencée pour que sa face inférieure vienne au contact d'une couche de produits par un déplacement du dispositif de préhension, et
- une jupe (4) latérale en matériau souple formant une bande entourant lesdites faces latérales de la plaque (3) d'aspiration,
la jupe (4) étant configurée pour passer d'une position de repos dans laquelle elle est à distance avec la ou les couche(s) de produits à une position de travail dans laquelle elle est en contact avec la ou les couche(s) de produits et les surfaces d'appui de la plaque d'aspiration et dans laquelle la jupe (4) forme avec le plan (P) un volume de dépression fermé au-dessus et sur les côtés de la ou les couche(s) de produits, la plaque d'aspiration (3) étant mobile verticalement par rapport à la jupe (4) pour adapter le volume de dépression à la hauteur de la ou les couche(s) de produits à saisir par le dispositif de préhension,
le dispositif de préhension comprenant en outre un dispositif de serrage (6) apte à être activé pour venir au contact et/ou serrer la ou les couche(s) de produits,
**caractérisé en ce que** ledit dispositif de serrage (6) comprend quatre barres télescopiques (61, 62, 63, 64) formant un rectangle dont la surface diminue lorsque le dispositif de serrage (6) est activé pour venir au contact de la ou les couche(s) de produits.

2. Dispositif (1) de préhension selon la revendication 1 dans lequel la plaque (3) d'aspiration comprend des ouvertures latérales (31) sur son contour pour coller par aspiration la jupe (4) latérale à ses faces d'appui en position de travail.

3. Dispositif de préhension (1) selon l'une des revendications précédentes, dans lequel la jupe (4) comprend quatre toiles (41, 42, 43, 44) rectangulaires, chacune étant disposée d'un côté du rectangle défini par les barres télescopiques (61, 62, 63, 64) et présentant une longueur similaire à la longueur maximale de la barre télescopique (61, 62, 63, 64) disposé du même côté du rectangle et ayant un côté inférieur partiellement fixée à celle-ci.

4. Dispositif (1) selon la revendication précédente, dans lequel un dispositif d'accumulation (7) est agencé entre chaque paire de barres télescopiques adjacentes (61, 62), ledit dispositif d'accumulation (7) étant configuré pour recevoir une partie excédentaire de chacune des deux toiles fixées à ladite paire de barres télescopiques lorsque le dispositif de serrage est activé pour venir au contact de la ou les couche(s) de produits.

5. Dispositif (1) de préhension selon l'une des revendications précédentes comprenant en outre un plateau (5, 5') de support de la ou les couche(s) de produits, mobile horizontalement entre une position de support dans laquelle il est situé sous la ou les couche(s) de produits et une position de repli dans laquelle il est à l'écart de des produits.

6. Dispositif de préhension (1) selon la revendication précédente dans lequel le plateau (5, 5') de support est formé par une pluralité de panneaux (51, 52, 53, 51', 52', 53') articulés les uns par rapport aux autres et aptes à être déployés sous les produits en position de support et à être repliés en position de repli.

7. Dispositif de préhension selon l'une des revendications précédentes dans lequel la plaque (3) d'aspiration comprend en outre des ouvertures d'aspiration (32) reliées à un deuxième dispositif de pompage et configurées pour aspirer des produits lorsque la plaque d'aspiration est en position de contact avec la ou les couche de produits.

8. System de palettisation ou dépalettisation comprenant un robot muni d'un dispositif de préhension selon l'une des revendications précédentes.

## Patentansprüche

1. Greifvorrichtung (1) zur Montage auf einem Palettier- oder Depalettierroboter zum Greifen einer Anordnung von Produkten, die in Form von mindestens einer Schicht auf einem Behälter angeordnet sind, wobei die Greifvorrichtung (1) einen Rahmen (2) umfasst, auf dem montiert sind:
- eine Saugplatte (3) umfassend Seitenflächen, die Auflageflächen bilden, und eine Unterseite, die eine im Wesentlichen horizontale Ebene (P) bildet, wenn die Greifvorrichtung am Roboter montiert ist, wobei die Saugplatte mit einer ersten Pumpvorrichtung verbunden ist und Unterdrucköffnungen (30) aufweist und so angeordnet ist, dass ihre Unterseite durch eine Bewegung der Greifvorrichtung mit einer Produktschicht in Kontakt kommt, und
- eine seitliche Schürze (4) aus flexiblem Material, die einen Streifen bildet, der die Seitenflächen der Saugplatte (3) umgibt,
wobei die Schürze (4) konfiguriert ist, um von einer Ruhestellung, in der sie einen Abstand zur/zu der/den Produktschicht(en) hat, in eine Arbeitsstellung überzugehen, in der sie mit der/den Produktschicht(en) und den Auflageflächen der Saugplatte in Kontakt steht und wobei die Schürze (4) mit der Ebene (P) ein oben und seitlich zur/zu den Produktschicht(en) geschlossenes Unterdruckvolumen bildet, wobei die Saugplatte (3) vertikal relativ zur Schürze (4) beweglich ist, um das Unterdruckvolumen an die Höhe der von der Greifvorrichtung zu erfassenden Produktschicht(en) anzupassen,
wobei die Greifvorrichtung ferner eine Klemmvorrichtung (6) umfasst, die geeignet ist, aktiviert zu werden, um mit der/den Produktschicht(en) in Kontakt zu kommen und/oder diese zu klemmen,
**dadurch gekennzeichnet, dass** die Klemmvorrichtung (6) vier Teleskopstangen (61, 62, 63, 64) umfasst, die ein Rechteck bilden, dessen Fläche sich verringert, wenn die Klemmvorrichtung (6) aktiviert wird, um mit der/den Produktschicht(en) in Kontakt zu kommen.

2. Greifvorrichtung (1) nach Anspruch 1, wobei die Saugplatte (3) seitliche Öffnungen (31) an ihrem Rand aufweist, um die seitliche Schürze (4) in Arbeitsstellung durch Ansaugen an ihren Auflageflächen festzuhalten.

3. Greifvorrichtung (1) nach einem der vorstehenden Ansprüche, wobei die Schürze (4) vier rechteckige Gewebe (41, 42, 43, 44) umfasst, die jeweils an einer Seite des Rechtecks angeordnet sind, das durch die Teleskopstangen (61, 62, 63, 64) definiert wird, und eine Länge aufweisen, die der maximalen Länge der Teleskopstange (61, 62, 63, 64) entspricht, die auf derselben Seite des Rechtecks angeordnet ist, und eine Unterseite aufweisen, die teilweise daran befestigt ist.

4. Vorrichtung (1) nach dem vorstehenden Anspruch, wobei zwischen jedem Paar angrenzender Teleskopstangen (61, 62) eine Ansammelvorrichtung (7) angeordnet ist, wobei die Ansammelvorrichtung (7) konfiguriert ist, um einen überschüssigen Teil jedes der beiden an dem Paar Teleskopstangen befestigten Gewebe aufzunehmen, wenn die Klemmvorrichtung aktiviert wird, um mit der/den Produktschicht(en) in Kontakt zu kommen.

5. Greifvorrichtung (1) nach einem der vorstehenden Ansprüche, die ferner eine Platte (5, 5') zum Tragen der Produktschicht(en) umfasst, die horizontal zwischen einer Tragestellung, in der sie sich unter der/den Produktschicht(en) befindet, und einer Rückzugsstellung, in der sie von den Produkten entfernt ist, beweglich ist.

6. Greifvorrichtung (1) nach dem vorstehenden Anspruch, wobei die Tragplatte (5, 5') aus einer Vielzahl von Platten (51, 52, 53, 51', 52', 53') gebildet wird, die relativ zueinander gelenkig sind und unter den Produkten in eine Tragestellung ausgefahren und in eine Rückzugsstellung zurückgezogen werden können.

7. Greifvorrichtung nach einem der vorstehenden Ansprüche, wobei die Saugplatte (3) ferner Saugöffnungen (32) umfasst, die mit einer zweiten Pumpvorrichtung verbunden und konfiguriert sind, um Produkte anzusaugen, wenn sich die Saugplatte in Kontakt mit der Produktschicht oder den Produktschichten befindet.

8. Palettier- oder Depalettiersystem, umfassend einen Roboter, der mit einer Greifvorrichtung nach einem der vorstehenden Ansprüche ausgestattet ist.

## Claims

1. Gripping device (1), intended to be mounted on a palletizing or depalletizing robot and intended for gripping a set of products arranged in at least one layer on a container, said gripping device (1) comprising a frame (2) on which the following are mounted:
- a suction plate (3) comprising side faces forming bearing surfaces and a lower face forming a substantially horizontal plane (P) when the gripping device is mounted on the robot, said suction plate being connected to a first pumping device and having vacuum openings (30), and being arranged so that the bottom face of the suction plate comes into contact with a product layer by means of a movement of the gripping device, and
- a side skirt (4) made of flexible material forming a strip surrounding said side faces of the suction plate (3),
the skirt (4) being designed to go from a rest position in which it is spaced apart from the product layer(s) to a working position in which it is in contact with the product layer(s) and the bearing surfaces of the suction plate and in which the skirt (4), together with the plane (P), forms a closed vacuum volume above and at the sides of the product layer(s), the suction plate (3) being vertically movable relative to the skirt (4) in order to adapt the vacuum volume to the height of the product layer(s) to be grasped by the gripping device,
the gripping device further comprising a clamping device (6) which is capable of being activated to come into contact and/or to clamp the product layer(s),
**characterized in that** said clamping device (6) comprises four telescopic bars (61, 62, 63, 64) forming a rectangle, the surface of which decreases when the clamping device (6) is activated to come into contact with the product layer(s).

2. Gripping device (1) according to claim 1, wherein the suction plate (3) comprises side openings (31) on its contour for adhering the side skirt (4) by suction to the bearing faces of the suction plate in the working position.

3. Gripping device (1) according to any of the preceding claims, wherein the skirt (4) comprises four rectangular webs (41, 42, 43, 44), each being arranged on a side of the rectangle defined by the telescopic bars (61, 62, 63, 64) and having a length similar to the maximum length of the telescopic bar (61, 62, 63, 64) arranged on the same side of the rectangle and having a lower side partially attached to the telescopic bar.

4. Device (1) according to the preceding claim, wherein a gathering device (7) is arranged between each pair of adjacent telescopic bars (61, 62), said gathering device (7) being designed to receive an excess portion of each of the two webs attached to said pair of telescopic bars when the clamping device is activated to come into contact with the product layer(s).

5. Gripping device (1) according to any of the preceding claims, further comprising a support tray (5, 5') for supporting the product layer(s), which tray is movable horizontally between a support position in which it is located under the product layer(s) and a folded position in which it is away from the products.

6. Gripping device (1) according to the preceding claim, wherein the support tray (5, 5') is formed by a plurality of panels (51, 52, 53, 51', 52', 53') articulated relative to one another and capable of being deployed under the products in the support position and of being folded in the folded position.

7. Gripping device according to any of the preceding claims, wherein the suction plate (3) further comprises suction openings (32) connected to a second pumping device and designed to suck products when the suction plate is in a position of contact with the product layer(s).

8. Palletizing or depalletizing system comprising a robot provided with a gripping device according to any of the preceding claims.
